(19) Europäisches Patentamt
European Patent Office
Office européen des brevets

(11) **EP 1 101 958 B1**

(12) **EUROPEAN PATENT SPECIFICATION**

(45) Date of publication and mention
of the grant of the patent:
**18.08.2004   Bulletin 2004/34**

(51) Int Cl.⁷: **F16B 25/00**

(21) Application number: **00500232.4**

(22) Date of filing: **13.11.2000**

(54) **Screw with low-height head**

Schraube mit geringer Kopfhöhe

Vis à tête de niveau bas

(84) Designated Contracting States:
**AT BE CH CY DE DK ES FI FR GB GR IE IT LI LU
MC NL PT SE TR**

(30) Priority: **15.11.1999  ES 9902873 U**

(43) Date of publication of application:
**23.05.2001   Bulletin 2001/21**

(73) Proprietor: **Celo Distribucion, S.A.
08211 Castellar del Valles (ES)**

(72) Inventor: **Ceravalls Pujol, Ramon
08211 Castellar del Valles (ES)**

(74) Representative: **Ponti Sales, Adelaida et al
Oficina Ponti
C. Consell de Cent, 322
08007 Barcelona (ES)**

(56) References cited:
**EP-A- 0 494 651         EP-A- 0 887 563
DE-A- 19 637 969         US-A- 5 356 253**

**Description**

The present invention relates to a screw with a head of low height, particularly useful in the field of metal carpentry, of the type which comprises a head and a threaded shank, with said shank including a widened zone in contact with the lower face of the head.

A screw of this type is disclosed in U.S. Patent 5,356,253A.

BACKGROUND OF THE INVENTION

Known in the art are screws with several types of head, for example hexagonal, cylindrical, coach-screw, countersunk, etc.

In particular, some conventional screws used for metal-carpentry profiles have a mushroom-head with a flat lower part.

It has nevertheless been found that in some applications, for example, in the assembly of profiles for sliding doors/windows, the heads of these screws can prevent good operation of the sliding leaf.

In this type of application, other fixing systems can be used, such as gluing or riveting, or smaller screws, but such solutions either complicate assembly or reduce fixing strength.

Another possibility is to use screws with a low-height head and with a transition between head and shank of quite large diameter, from 1.1 times the nominal thread diameter; however, this solution means that the holes into which the stem and neck of the screw are inserted must be oversized, which is a disadvantage for certain applications.

Moreover, the prominence of the heads of the screws is not very attractive and can be a hazard for people who handle the metal-carpentry fitment once it has been assembled.

DESCRIPTION OF THE INVENTION

The objective of this invention is to solve the mentioned drawbacks.

In accordance with this objective, the screw of the invention is characterized in that the head complies with the ratio:

$$0.135 \leq k/d_k \leq 0.21$$

and the widened zone complies with the ratio:

$$d_c/d_1 < 1.1$$

where k is the height of the head, $d_k$ is the diameter of the lower face thereof, $d_c$ is the maximum diameter of the widened zone of the shank and $d_1$ is the nominal diameter of the shank thread.

. This geometrical layout of the head and of the transition zone between the shank and the head prevents the screw from being able to interfere with moving elements which slide over the screw, so that it is particularly useful, for example, for securing profiles for sliding doors and windows.

Moreover, the small diameter of the transition from the head to the shank allows the screw to be fixed in holes of small diameter, without any need to oversize them, and prevents the transition zone from warping when profiles of low thickness have to be joined together, as occurs with screws which have a transition zone of larger diameter.

Preferably, the upper face and the lower face of the screw head comply with the ratio:

$$d_p/d_k < 0.75$$

where dp is the diameter of the upper face and $d_k$ is the diameter of the lower face of the screw head.

This arrangement favors the movement of a piece which travels in a direction approximately parallel to the base of the screw, even if the distance between the profile and the moving part is less than the height of the head of the screw, while it also reduces the risk of injury due to abrasion or blows of the hands or other parts of the body against the head of the screw.

In one embodiment, the union between the upper face and the lower face of the head of the screw is a substantially frustum-conical surface; more particularly, it can be an bulged frustum-conical surface.

BRIEF DESCRIPTION OF THE DRAWINGS

For a better understanding of all that has been outlined some drawings are attached which, schematically and solely by way of non-restrictive example, show a practical case of embodiment.

DESCRIPTION OF A PREFERRED EMBODIMENT

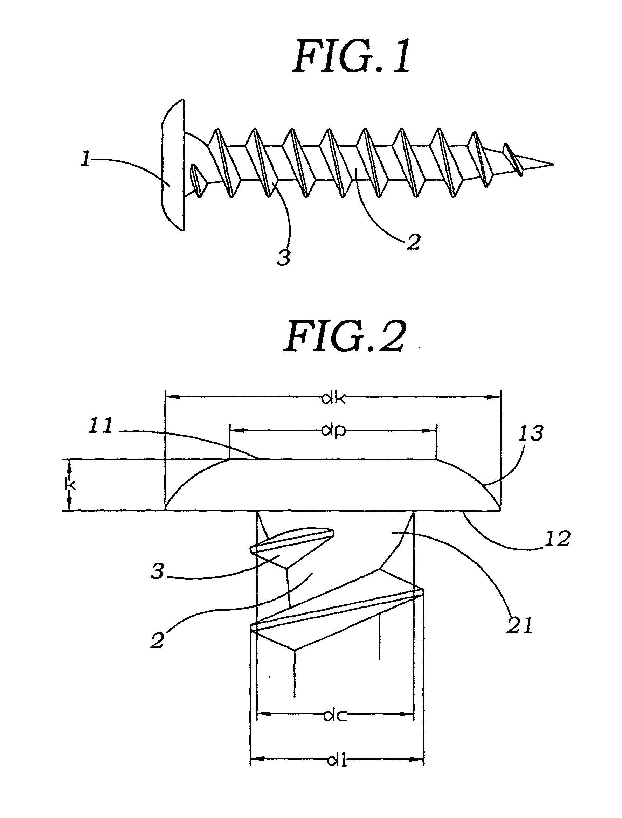

In said drawings, Figure 1 shows a screw in accordance with the present invention, and Figure 2 is an enlarged view of the head of the screw, in which its dimensions have been shown.

As these figures show, the screw is of the type which has a mushroom-head 1, flat on its lower face, and a shank 2 with a thread 3.

The head 1 of the screw has a flat upper face 11, of diameter dp, a lower face 12 which is also flat and of a diameter $d_k$ slightly larger than that of the upper face, and a rounded edge 13 which links the two faces. The head 1 is of a height identified with the reference k.

The maximum diameter of the zone of transition 21 from the shank 2 to the head 1, i.e. the part of the shank closest to the head, has been identified with reference $d_c$, while the nominal diameter of the thread has been identified with reference $d_1$.

In accordance with the invention, the head of the screw is extra-flat, with a particular layout that complies with the following ratios:

$$0.135 \leq k/d_k \leq 0.21$$
$$dc /d1 < 1.1$$

These ratios show, on one hand, that the height of the head is between 13.5% and 21% of the diameter, and, on the other hand, that the diameter of the transition zone is at most 10% greater than the nominal diameter of the thread.

The union 13 between the upper face 11 and the lower face 12 of the head can be an inclined plane, that is, a substantially frustum-conical surface, or simply a rounded zone; in the preferred embodiment shown, the diameters of said zones comply with the ratio:

dp /dk < 0.75

In other words, the diameter of the upper face is at most 75% of the diameter of the lower face; the resulting inclination of the union 13 between the two faces facilitates the sliding of a moving element on the head of the screw, and at the same time reduces the risk of injury due to abrasion or blows if the screw is left fitted in a position accessible for a person.

One specific example of a screw with the layout of this invention could be, for example for a 4.2 mm thread, one that has the following dimensions:

nominal diameter di = 4.2 mm;
maximum diameter of the transition $d_c$ = 4.1 mm;
diameter of the upper face of the head dp = 5.25 mm;
diameter of the lower face of the head $d_k$ = 8.0 mm;
union upper/lower faces: bulged frustum-conical;
head height K = 1.3 mm.

The head of the screw also has a slot made in it, which slot can be of any conventional type, for fitting a tool into it.

Although the drawings show a screw with a particular type of shank and thread, it is obvious that the invention could be applied to screws with any other type of shank, for example with metric thread.

## Claims

1. A screw with a head of low height, of the type that comprises a head (1) and a threaded shank (2,3), with said shank including a widened zone (21) in contact with the lower face (12) of the head (1), **characterized in that** the head (1) complies with the ratio:

$$0.135 \le k/d_k \le 0.21$$

and the widened zone (21) complies with the ratio:

$$d_c/d_1 < 1.1$$

where k is the height of the head (1), $d_k$ is the diameter of the lower face (12) thereof, $d_c$ is the maximum diameter of the widened zone (21) of the shank and $d_1$ is the nominal diameter of the shank thread (3).

2. A screw as claimed in Claim 1, **characterized in that** the upper face (11) and the lower face (12) of the screw head (1) comply with the ratio:

$$d_p/d_k < 0.75$$

where $d_p$ is the diameter of the upper face (11) and $d_k$ is the diameter of the lower face (12) of the screw head (1).

3. A screw as claimed in Claim 2, **characterized in that** the union (13) between the upper face (11) and the lower face (12) of the head (1) of the screw is a substantially frustum-conical surface (13).

4. A screw as claimed in Claim 3, **characterized in that** said frustum-conical surface (13) is bulged.

## Patentansprüche

1. Schraube mit einem Kopf von geringer Höhe, in der Ausführung, welche einen Kopf (1) und einen mit einem Gewinde versehenen Schaft (2, 3) aufweist, wobei der Schaft einen verbreiterten Bereich (21) aufweist, der in Kontakt mit der unteren Fläche (12) des Kopfes (1) steht, **dadurch gekennzeichnet, dass** der Kopf (1) mit dem fügenden Verhältnis übereinstimmt:

$$0, 135 \le k/d_k \le 0,21$$

und der verbreiterte Bereich (21) mit dem folgenden Verhältnis übereinstimmt:

$$d_c/d_1 < 1,1$$

wobei k die Höhe des Kopfes (1), $d_k$ der Durchmesser der unteren Fläche (12) davon, $d_c$ der größte Durchmesser des verbreiterten Bereichs (21) des Schafts und $d_1$ der Nenndurchmesser des Schaftgewindes (3) ist.

2. Schraube nach Anspruch 1, **dadurch gekennzeichnet, dass** die obere Fläche (11) und die untere Fläche (12) des Schraubenkopfes (1) mit dem folgenden Verhältnis übereinstimmt:

$$d_p/d_k < 0,75$$

wobei $d_p$ der Durchmesser der oberen Fläche (11) und $d_k$ der Durchmesser der unteren Fläche (12) des Schraubenkopfes (1) ist.

3. Schraube nach Anspruch 2, **dadurch gekennzeichnet. dass** die Verbindung (13) zwischen der oberen Fläche (11) und der unteren Fläche (12) des Kopfes (1) der Schraube im Wesentlichen eine kegelstumpfförmige Fläche (13) ist.

4. Schraube nach Anspruch 3, **dadurch gekennzeichnet, dass** die kegelstumpfförmige Fläche (13) ausgebaucht ist.

## Revendications

1. Vis avec une tête de faible hauteur, du type comprenant une tête (1) et une tige filetée (2, 3), ladite tige comprenant une zone élargie (21) en contact avec la face inférieure (12) de la tête (1), **caractérisée en ce que** la tête (1) respecte le rapport :

   $0{,}135 \leq k/d_k \leq 0{,}21$

   et la zone élargie (21) respecte le rapport

   $d_c/d_1 < 1{,}1$

   où k est la hauteur de la tête (1), $d_k$ est le diamètre de la face inférieure (12) de celle-ci, $d_c$ est le diamètre de la zone élargie (21) de la tige et $d_1$ est le diamètre nominal du filetage (3) de la tige.

2. Vis selon la revendication 1, **caractérisé en ce que** la face supérieure (11) et la face inférieure (12) de la tête de vis (1) respectent le rapport :

   $d_p/d_k < 0{,}75$

   où dp est le diamètre de la face supérieure (11) et $d_k$ est le diamètre de la face inférieure (12) de la tête de vis (1).

3. Vis selon la revendication 2, **caractérisé en ce que** la jointure 13) entre la face supérieure (11) et la face inférieure (12) de la tête (1) de la vis est une surface (13) sensiblement conique tronquée.

4. Vis selon la revendication 3, **caractérisé en ce que** ladite surface (13) conique tronquée est bombée.

# *FIG.1*

# *FIG.2*